# EUROPEAN PATENT SPECIFICATION

(11) **EP 3 223 460 B1**
(45) Date of publication and mention of the grant of the patent: **19.12.2018**
(21) Application number: 16162343.4
(22) Date of filing: 24.03.2016
(51) Int. Cl.: H04L 12/26, H04L 29/08, H04L 12/28, H04L 12/24

(54) **AUTOMATIC SERVER DISPATCH ACCORDING TO A STATUS AND UPPER LIMITS.**
AUTOMATISCHES SERVER DISPATCHEN GEMÄSS EINES STATUS UND OBERGRENZEN.
RÉPARTITION DE SERVEUR AUTOMATIQUE EN FONCTION D'UN STATUT ET DE LIMITES SUPÉRIEURES.

(43) Date of publication of application: 27.09.2017
(73) Proprietor: Climax Technology Co., Ltd., Taipei 114 (TW)
(72) Inventor: CHEN, Yi-Kai, Taipei 114 (TW); HUANG, Chun Chi, Taipei 114 (TW); LU, Hao-Cheng, Taipei 114 (TW); LIN, Pin-Hao, Taipei 114, Taiwan (TW)
(74) Representative: Karakatsanis, Georgios

(56) References cited:
- WO-A2-2008/102311
- US-A1- 2003 187 920
- US-B1- 6 779 017
- IVANA PODNAR ZARKO ET AL: "PresencePHIER: An ecosystem for rich presence", TELECOMMUNICATIONS (CONTEL), PROCEEDINGS OF THE 2011 11TH INTERNATIONAL CONFERENCE ON, IEEE, 15 June 2011 (2011-06-15), pages 133-140, XP031910397, ISBN: 978-1-61284-169-4
- "Digital cellular telecommunications system (Phase 2+); Universal Mobile Telecommunications System (UMTS); LTE; IP Multimedia Subsystem (IMS); Stage 2 (3GPP TS 23.228 version 10.9.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V10.9.0, 1 July 2015 (2015-07-01), XP014262133,

## Description

### BACKGROUND OF THE INVENTION

### 1. FIELD OF THE INVENTION

The present invention generally relates to a two-way communication system, and more particularly to an automatic server dispatching system and method.

### 2. DESCRIPTION OF RELATED ART

Home intelligent network is capable of controlling home facilities, such as lighting, heating, ventilation, air conditioning appliances, communication systems, entertainment and home security devices, to improve convenience, comfort, energy efficiency and security.

Home intelligent network may be connected to external networks via a gateway. The gateway may communicate with a service server via a two-way communication server to assist a user in monitoring and controlling facilities of home intelligent network. However, the service server has an upper service limit to how many gateways the service server can serve, and the two-way communication server usually has limited capacity. Accordingly, the service amount of conventional home intelligent network is limited, and its application is not expandable. WO 2008/102311 discloses a system and method for service differentiation including a Session Prioritization Function (SPF) for resources allocation/re-allocation decisions. If the load is normal or light, the SPF limits resources for each service class. "An ecosystem for rich presence" by Ivana Podnar Zarko et al. discloses an ecosystem for presence based on the Rich Presence Information Data format (RPID) which comprises both XMPP and SIP-based solutions for presence. US 2003/0187920 discloses a communication management system pertaining to managing communication between service providers and residential and/or telemetry gateways by providing a communication management system that is independent of the vendor of gateway used.

For the foregoing reasons, a need has arisen to propose a novel architecture to enhance service and application of home intelligent network.

### SUMMARY OF THE INVENTION

The invention is defined by two independent claims being claim 1 which refers to a system and claim 7 which relates to a method for automatic server dispatching. Further embodiments are specified by the dependent claims.

In view of the foregoing, it is an object of the embodiment of the present invention to provide an automatic server dispatching system and method for the purpose of automatically dispatching service servers in order to increase service amount and expand application.

According to one embodiment, an automatic server dispatching system includes a two-way communication server, a plurality of gateways, a plurality of service servers and a dispatching server. The service servers communicate with the gateways via the two-way communication server. The dispatching server dispatches the gateways to the service servers according to a dispatching status of the service servers and according to upper service limits denoting greatest amounts of how many gateways can be served by the service servers respectively. A user obtains the dispatching status via a user interface to recognize one of said service servers that corresponds to one of said gateways associated with a home intelligent network to be controlled.

According to another embodiment, an automatic server dispatching method includes the following steps: a gateway not yet dispatched requests a dispatching server via a two-way communication protocol to dispatch the gateway to one of a plurality of service servers; the dispatching server dispatches the gateway to one of the service servers according to a dispatching status of the service servers and according to upper service limits denoting greatest amounts of how many gateways can be served by the service servers respectively; the dispatching server updates the dispatching status of the service servers; the dispatching server notifies the gateway of a corresponding service server via the two-way communication protocol; and a user obtains the dispatching status via a user interface to recognize one of said service servers that corresponds to said gateway associated with a home intelligent network to be controlled.

### BRIEF DESCRIPTION OF THE DRAWINGS

FIG. 1 shows a system block diagram illustrating an automatic server dispatching system according to one embodiment of the present invention;
FIG. 2 shows a system block diagram exemplifying the automatic server dispatching system of FIG. 1;
FIG. 3A shows a flow diagram illustrating an automatic server dispatching method according to one embodiment of the present invention;
FIG. 3B shows an exemplary system schematic diagram accompanying FIG. 3A;
FIG. 3C shows an exemplary message transfer diagram accompanying FIG. 3A;
FIG. 4A to FIG. 4C show system block diagrams exemplifying the automatic server dispatching system; and
FIG. 5 shows a system block diagram exemplifying the automatic server dispatching system.

### DETAILED DESCRIPTION OF THE INVENTION

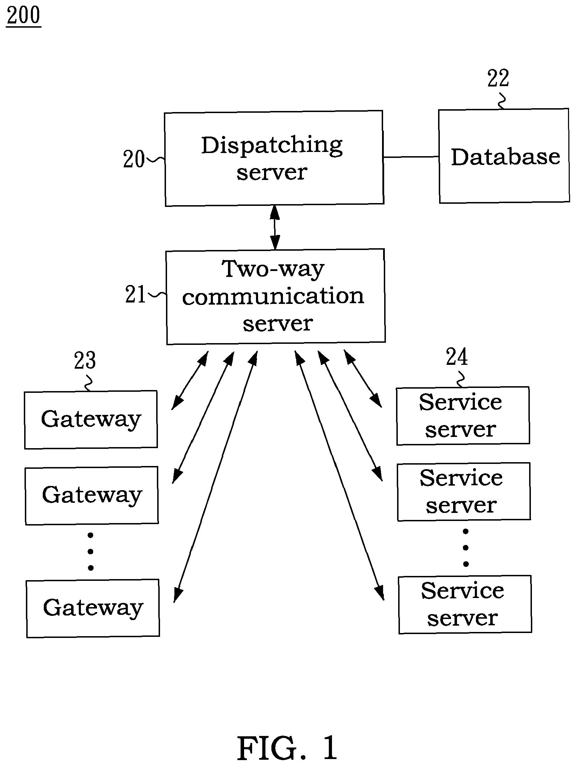

FIG. 1 shows a system block diagram illustrating an automatic server dispatching system 200 according to one embodiment of the present invention. The automatic server dispatching system (hereinafter dispatching system) 200 may include a two-way communication server 21. In one embodiment, the two-way communication server 21 adopts a message-oriented communication protocol, such as Extensible Messaging and Presence Protocol (XMPP) or Message Queuing Telemetry Transport (MQTT). In one exemplary embodiment, the two-way communication server 21 is, but not necessarily, an XMPP server.

The dispatching system 200 of the embodiment may also include gateways 23 and service servers 24. The gateways 23 may communicate with the service servers 24 via the two-way communication server 21. In the specification, the service servers 24 may be implemented by hardware (e.g., a computer), or implemented by software (e.g., a program).

In one embodiment, each gateway 23 may be connected to object devices in a wired or wireless manner, thereby resulting in Internet of Things (IoT) such as home intelligent network. The object devices mentioned above may include hardware devices (e.g., circuitry or sensor) or software devices (e.g., a program). The network directly connected to the gateway 23 may adopt a variety of wireless network techniques, such as Wi-Fi, Bluetooth, Zigbee and Z-Wave.

According to one aspect of the embodiment, the dispatching system 200 may include a dispatching server 20 primarily configured to dispatch the gateways 23 to the service servers 24, thereby facilitating automatic dispatch of the service servers 24. Specifically, the dispatching server 20 may dispatch the gateway 23 to one of the service servers 24 according to upper service limits of the service servers 24 (i.e., the greatest amount of how many gateways 23 the service server can serve) and a dispatching status of the service servers 24.

The dispatching status of the service servers 24 may be updated whenever necessary. The dispatching status may be recorded in a memory device, for example, of the dispatching server 20, the two-way communication server 21 or other suitable sites. As illustrated in FIG. 1, the dispatching status is recorded in a database 22. Although the database 22 is connected to the dispatching server 20 as exemplified in FIG. 1, it is appreciated that the database 22 may be connected to the two-way communication server 21 instead. In one exemplary embodiment, the database 22 adopts a relational database such as, but not limited to, My Structured Query Language (MySQL) database. After dispatching, the gateways 23 may register at corresponding service servers 24 via the two-way communication server 21. Thereafter, the gateways 23 may communicate with the service server 24 via the two-way communication server 21.

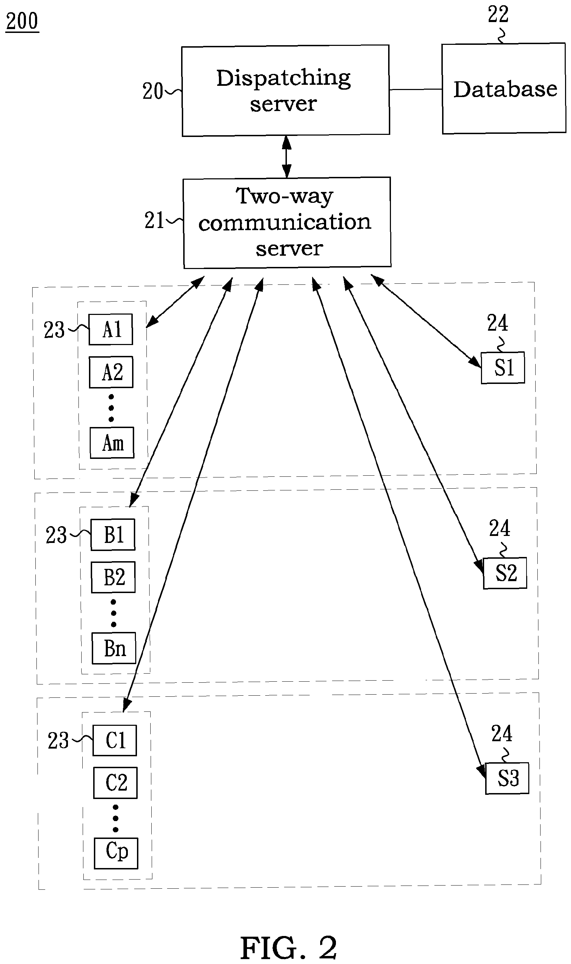

FIG. 2 shows a system block diagram exemplifying the automatic server dispatching system 200 of FIG. 1. In the exemplary embodiment, the dispatching server 20 dispatches gateways A1, A2 ... Am (23) to a first service server S1 (24), dispatches gateways B1, B2 ... Bn (23) to a second service server S2 (24), and dispatches gateways C1, C2 ... Cp (23) to a third service server S3 (24), where m is a value less than an upper service limit of the first service server S1 (24), that is, the greatest amount of how many gateways 23 the first service server S1 can serve; n is a value less than an upper service limit of the second service server S2 (24); and p is a value less than an upper service limit of the third service server S3 (24).

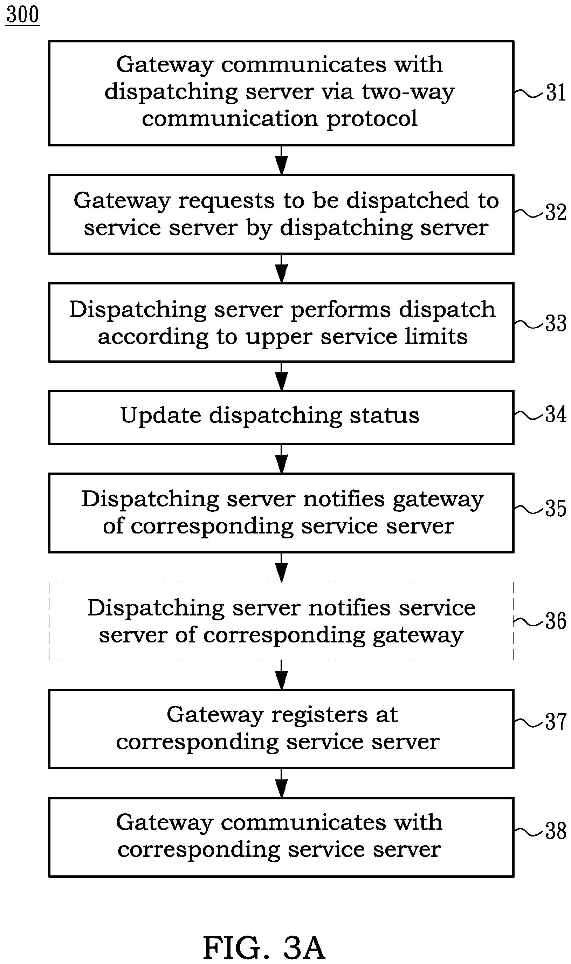

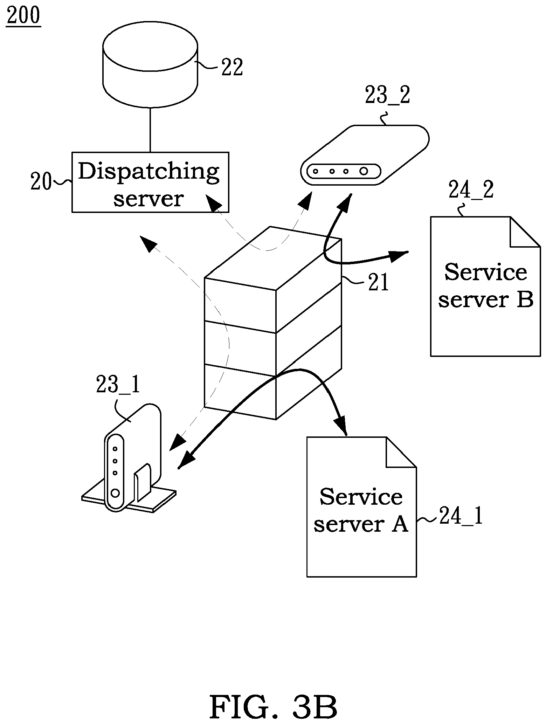

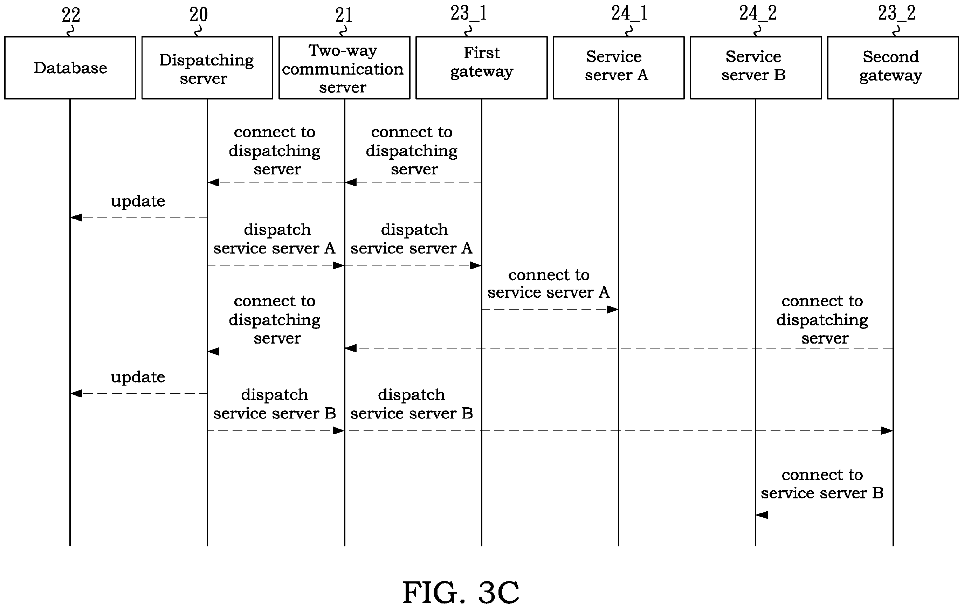

FIG. 3A shows a flow diagram illustrating an automatic server dispatching method 300 according to one embodiment of the present invention. For better understanding the flow shown in FIG. 3A, please refer to FIG. 3B illustrating a simplified example, and FIG. 3C illustrating a message transfer diagram.

First, in step 31, the gateway 23 may communicate with the dispatching server 20 via a two-way communication protocol. As exemplified in FIG. 3B/3C, the first gateway 23_1 may be connected to and communicate with the dispatching server 20 via the two-way communication protocol (e.g., XMPP or MQTT) of the two-way communication server 21.

In step 32, a not-yet-dispatched gateway 23 may request the dispatching server 20 to dispatch the gateway 23 to one of the service servers 24. In the specification, not-yet-dispatched gateways 23 may broadly refer to gateways needed be dispatched once again. Subsequently, in step 33, the dispatching server 20 may dispatch the gateway 23 to one of the service servers 24 according to upper service limits of the service servers 24 and a dispatching status of the service servers 24. As exemplified in FIG. 3B/3C, the dispatching server 20 determines that the amount of the gateways 23 that the service server A (24_1) can serve has not reached the upper service limit. Accordingly, the dispatching server 20 thus dispatches the first gateway 23_1 to the service server A (24_1).

In step 34, the dispatching server 20 may update a dispatching status after completing step 33. In step 35, the dispatching server 20 may notify the gateway 23 of a corresponding dispatched service server 24 via the two-way communication protocol. As exemplified in FIG. 3B/3C, the dispatching server 20 notifies the first gateway 23_1 of a corresponding dispatched service server A (24_1).

In optional step 36, the dispatching server 20 may notify the service server 24 of a corresponding gateway 23 via the two-way communication protocol. For example, the dispatching server 20 notifies the service server A (24_1) of the corresponding first gateway 23_1 via the two-way communication protocol of the two-way communication server 21. Steps 34, 35 and 36 discussed above may be performed in an order other than that shown in FIG. 3A.

Afterwards, in step 37, the gateway 23 may register at the corresponding service server 24 via the two-way communication protocol. Accordingly, in step 38, the gateway 23 may communicate with the corresponding service server 24 via the two-way communication protocol. As exemplified in FIG. 3B/3C, the first gateway 23_1 registers at the service server A (24_1) via the two-way communication protocol of the two-way communication server 21. Accordingly, the first gateway 23_1 communicates with the service server A (24_1) via the two-way communication protocol of the two-way communication server 21.

As exemplified above, the first gateway 23_1 is dispatched to the service server A (24_1). The second gateway 23_2 as shown in FIG. 3B/3C may be dispatched to the service server B (24_2) in a similar manner.

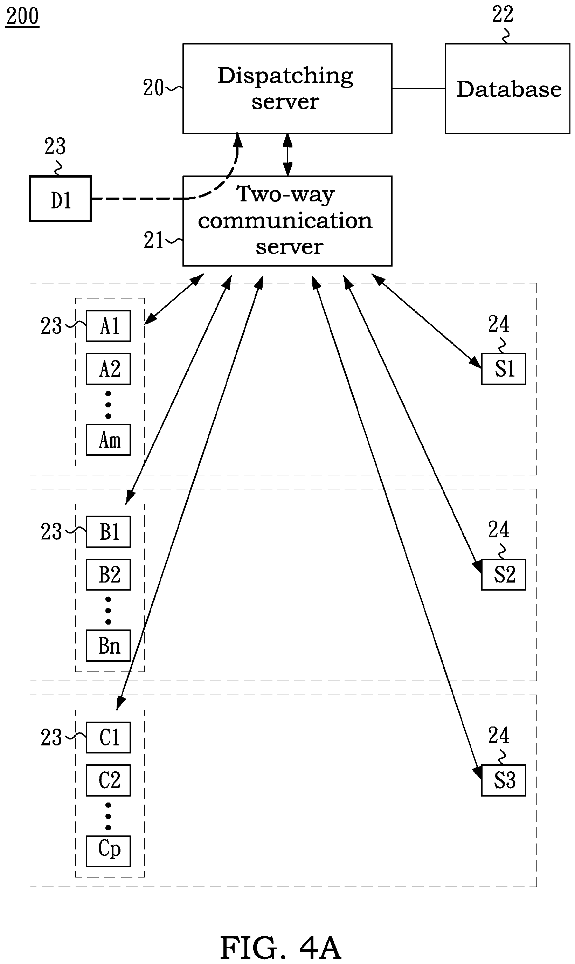

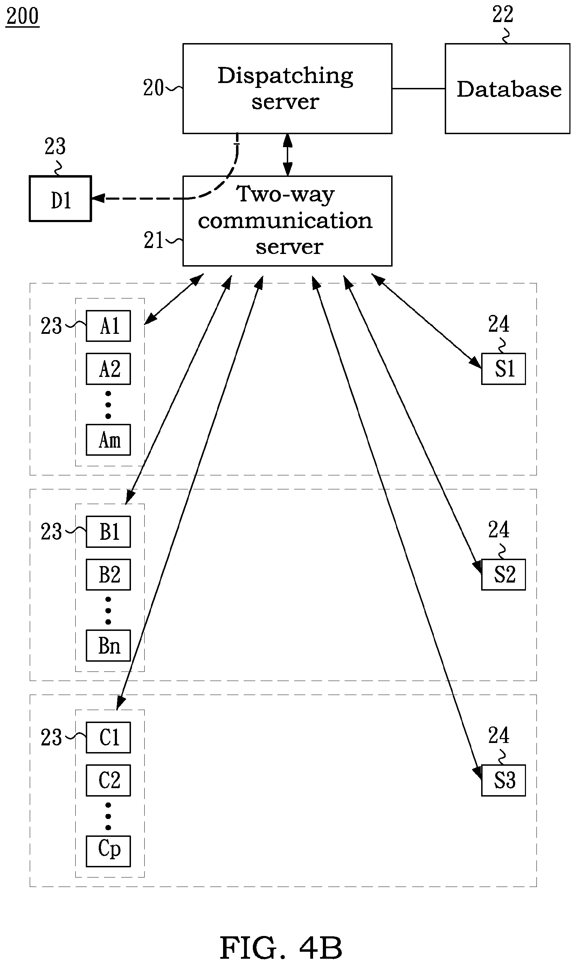

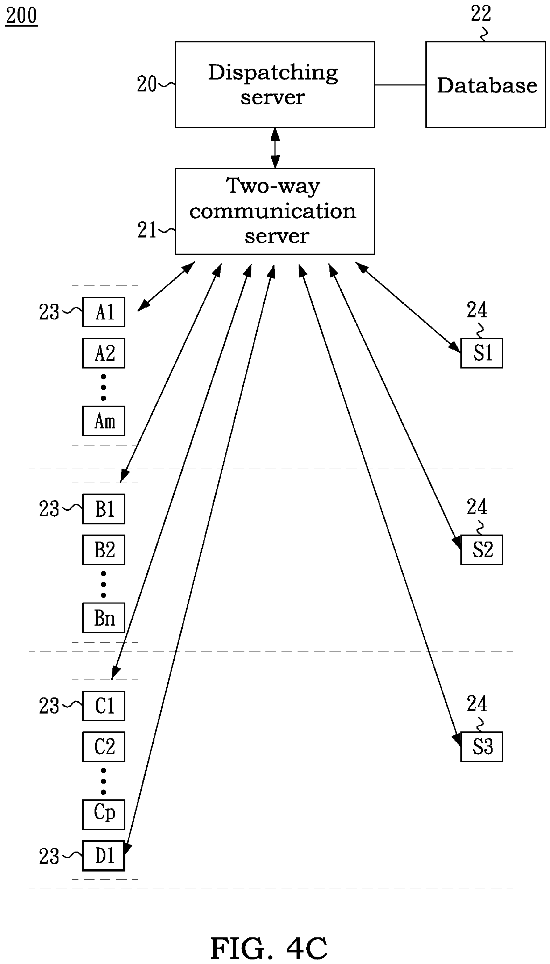

FIG. 4A to FIG. 4C follow FIG. 2 to demonstrate that a gateway D1 (23) joins the automatic server dispatching system 200. First, as shown in FIG. 4A, the gateway D1 (23) communicates with the dispatching server 20 via the two-way communication server 21 (step 31), and requests the dispatching server 20 to dispatch the gateway D1 (23) to one of the service servers 24 (step 32). The dispatching server 20 determines that the amount of the gateways C1, C2 ... Cp (23) has not reached the upper service limit of the third service server S3 (24). Accordingly, the gateway D1 (23) is thus dispatched to the third service server S3 (24) (step 33). As shown in FIG. 4B, the dispatching server 20 notifies the gateway D1 (23) that the gateway D1 (23) has been dispatched to the third service server S3 (24) (step 35). FIG. 4C shows a system block diagram illustrating the automatic server dispatching system 200 after dispatch. Accordingly, the gateway D1 (23) registers at the third service server S3 (24) via the two-way communication server 21 (step 37), and, thereafter, the gateway D1 (23) communicates with the third service server S3 (24) via the two-way communication server 21 (step 38).

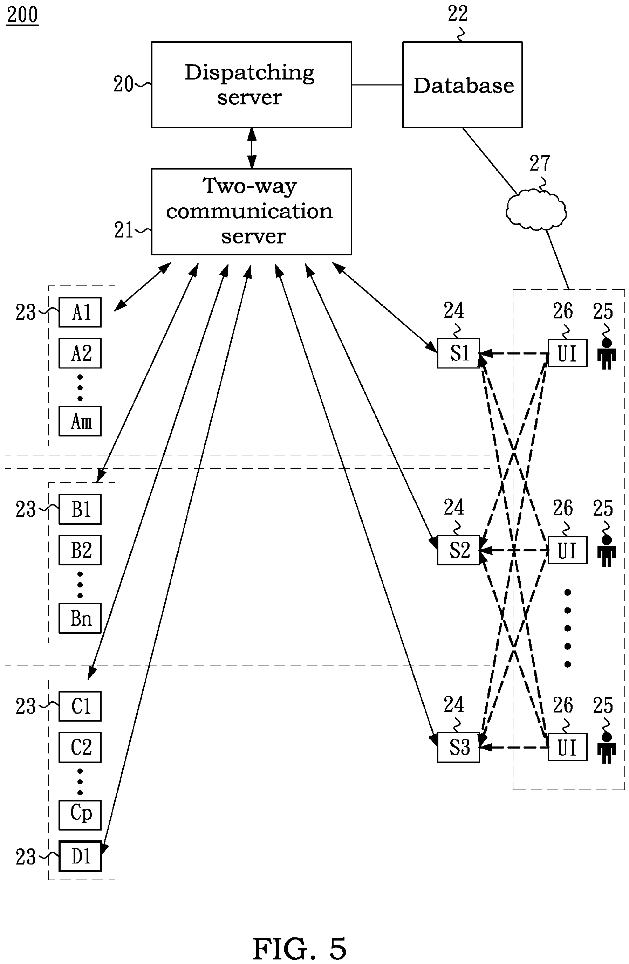

FIG. 5 follows FIG. 4C to demonstrate that, after the dispatch and register of the gateway 23, a user 25 may control object devices (not shown) connected with the corresponding gateway 23. Specifically, first, the user 25 may obtain dispatching status of the gateway 23 from the database 22 via an associated user interface (UI) 26. As a result, the user 25 may recognize the service server 24 corresponding to the gateway 23 to be controlled. As exemplified in FIG. 5, the dispatching status of the gateway 23 may be obtained by the user interface 26 from the database 22 via a network (e.g., the Internet) 27. After recognizing the corresponding service server 24 by the user interface 26, the service server 24 may communicate with the corresponding gateway 23 via the two-way communication server 21. Accordingly, the user 25 may control the object devices connected with the corresponding gateway 23.

## Claims

1. An automatic server dispatching system (200), comprising:
a two-way communication server (21);
a plurality of gateways (23);
a plurality of service servers (24) communicating with the plurality of gateways via the two-way communication server; and
a dispatching server (20) dispatching the gateways to the service servers according to a dispatching status of the service servers and according to upper service limits denoting greatest amounts of how many gateways can be served by the service servers respectively;
wherein a user obtains the dispatching status information via a user interface to be informed of one of said service servers that corresponds to one of said gateways associated with a home intelligent network to be controlled.

2. The system of claim 1, wherein the two-way communication server (21) applies a message-oriented communication protocol.

3. The system of claim 2, wherein the message-oriented communication protocol comprises Extensible Messaging and Presence Protocol, XMPP, or Message Queuing Telemetry Transport, MQTT.

4. The system of claim 1, further comprising a database (22) that records the dispatching status.

5. The system of claim 1, after dispatching, the gateways (23) register at corresponding service servers (24) via the two-way communication server (21), and the gateways then communicate with the corresponding service servers via the two-way communication server.

6. The system of claim 1, wherein the gateways (23) each connect with a plurality of object devices to result in Internet of Things, IOT.

7. An automatic server dispatching method (300), comprising:
a gateway (23) not yet dispatched communicating with a dispatching server (20) via a two-way communication protocol to dispatch the gateway to one of a plurality of service servers (24) by the dispatching server; (31 and 32)
the dispatching server dispatching the gateway to one of the service servers according to a dispatching status of the service servers and according to upper service limits denoting greatest amounts of how many gateways can be served by the service servers respectively; (33)
the dispatching server updating the dispatching status of the service servers; (34)
the dispatching server notifying the gateway of a corresponding service server via the two-way communication protocol; (35) and
a user obtaining the dispatching status information via a user interface to be informed of one of said service servers that corresponds to said gateway associated with a home intelligent network to be controlled.

8. The method of claim 7, wherein the two-way communication protocol applies a message-oriented communication protocol.

9. The method of claim 8, wherein the message-oriented communication protocol comprises Extensible Messaging and Presence Protocol, XMPP, or Message Queuing Telemetry Transport, MQTT.

10. The method of claim 7, wherein the dispatching status information is updated in a database (22).

11. The method of claim 7, further comprising:
the dispatching server (20) notifying the corresponding service server (24) of the gateway (23) to be dispatched.

12. The method of claim 7, further comprising:
the gateway (23) registering at the corresponding service server (24) via the two-way communication protocol; (37) and
having registered, the gateway is communicating with the corresponding service server via the two-way communication server. (38)

13. The method of claim 7, wherein the gateway (23) connects with a plurality of object devices to result in Internet of Things, IOT.

## Patentansprüche

1. Automatisches Serverabfertigungssystem (200), umfassend:
einen Zweiwege-Kommunikationsserver (21);
mehrere Gateways (23);
mehrere Dienstserver (24), die mit den mehreren Gateways über den Zweiwege-Kommunikationsserver kommunizieren; und
einen Abfertigungsserver (20), der die Gateways zu den Dienstservern gemäß einem Abfertigungsstatus der Dienstserver und gemäß oberen Dienstgrenzen abfertigt, die größte Mengen von wie vielen Gateways bezeichnen, die jeweils durch die Dienstserver versorgt werden können;
wobei ein Benutzer die Abfertigungsstatusinformation über eine Benutzerschnittstelle erhält, um über einen der Dienstserver informiert zu werden, der einem der Gateways entspricht, die mit einem intelligenten Heimnetzwerk assoziiert sind, das gesteuert werden soll.

2. System nach Anspruch 1, wobei der Zweiwege-Kommunikationsserver (21) ein nachrichtenorientiertes Kommunikationsprotokoll anwendet.

3. System nach Anspruch 2, wobei das nachrichtenorientierte Kommunikationsprotokoll Extensible Messaging And Presence Protocol, XMPP, oder Message Queuing Telemetry Transport, MQTT, umfasst.

4. System nach Anspruch 1, ferner umfassend eine Datenbank (22), die den Abfertigungsstatus aufzeichnet.

5. System nach Anspruch 1, wobei sich die Gateways (23), nach dem Abfertigen, an entsprechenden Dienstservern (24) über den Zweiwege-Kommunikationsserver (21) registrieren und die Gateways dann mit den entsprechenden Dienstservern über den Zweiwege-Kommunikationsserver kommunizieren.

6. System nach Anspruch 1, wobei sich die Gateways (23) jeweils mit mehreren Objektgeräten zum Resultieren im Internet der Dinge, IOT, verbinden.

7. Automatisches Serverabfertigungsverfahren (300), umfassend:
ein Gateway (23), das noch nicht abgefertigt ist und mit einem Abfertigungsserver (20) über ein Zweiwege-Kommunikationsprotokoll zum Abfertigen des Gateways zu einem von mehreren Dienstservern (24) durch den Abfertigungsserver kommuniziert; (31 und 32)
wobei der Abfertigungsserver das Gateway zu einem der Dienstserver gemäß einem Abfertigungsstatus der Dienstserver und gemäß oberen Dienstgrenzen abfertigt, die größte Mengen von wie vielen Gateways bezeichnen, die jeweils durch die Dienstserver versorgt werden können; (33)
wobei der Abfertigungsserver den Abfertigungsstatus der Dienstserver aktualisiert; (34)
wobei der Abfertigungsserver das Gateway über einen entsprechenden Dienstserver über das Zweiwege-Kommunikationsprotokoll benachrichtigt; (35) und
wobei ein Benutzer die Abfertigungsstatusinformation über eine Benutzerschnittstelle erhält, um über einen der Dienstserver informiert zu werden, der einem der Gateways entspricht, die mit einem intelligenten Heimnetzwerk assoziiert sind, das gesteuert werden soll.

8. Verfahren nach Anspruch 7, wobei das Zweiwege-Kommunikationsprotokoll ein nachrichtenorientiertes Kommunikationsprotokoll anwendet.

9. Verfahren nach Anspruch 8, wobei das nachrichtenorientierte Kommunikationsprotokoll Extensible Messaging And Presence Protocol, XMPP, oder Message Queuing Telemetry Transport, MQTT, umfasst.

10. Verfahren nach Anspruch 7, wobei die Abfertigungsstatusinformation in einer Datenbank (22) aktualisiert wird.

11. Verfahren nach Anspruch 7, ferner umfassend:
Benachrichtigen des entsprechenden Dienstservers (24) über das Gateway (23), das abgefertigt werden soll, durch den Abfertigungsserver (20).

12. Verfahren nach Anspruch 7, Registrieren des Gateways (23) am entsprechenden Dienstserver (24) über das Zweiwege-Kommunikationsprotokoll; (37) und
wobei, nach dem Registrieren, das Gateway mit dem entsprechenden Dienstserver über den Zweiwege-Kommunikationsserver kommuniziert. (38)

13. Verfahren nach Anspruch 7, wobei sich das Gateway (23) mit mehreren Objektgeräten zum Resultieren im Internet der Dinge, IOT, verbindet.

## Revendications

1. Système automatisé de répartition de serveur (200), comprenant :
un serveur à communication bidirectionnelle (21) ;
une pluralité de passerelles (23) ;
une pluralité de serveurs de service (24) communicant avec la pluralité de passerelles par l'intermédiaire du serveur à communication bidirectionnelle ; et
un serveur de répartition (20) permettant de répartir les passerelles aux serveurs de service conformément à un état de répartition des serveurs de service et conformément à des limites de service supérieures reflétant les plus grands nombres de passerelles pouvant être desservies par les serveurs de service respectivement ;
dans lequel un utilisateur obtient les informations concernant l'état de répartition par l'intermédiaire d'une interface d'utilisateur devant être informée de l'un desdits serveurs de service qui correspond à l'une desdites passerelles associées à un réseau intelligent domestique devant être commandé.

2. Système selon la revendication 1, dans lequel le serveur à communication bidirectionnelle (21) applique un protocole de communication à message orienté.

3. Système selon la revendication 2, dans lequel le protocole de communication à message orienté comprend un protocole de messagerie et de présence extensible, XMPP, ou un protocole de transport de télémétrie d'attente de message, MQTT.

4. Système selon la revendication 1, comprenant en outre une base de données (22) qui enregistre l'état de répartition.

5. Système selon la revendication 1, après la répartition, les passerelles (23) enregistrent au niveau des serveurs de services correspondants (24) par l'intermédiaire du serveur à communication bidirectionnelle (21), et les passerelles communiquent ensuite avec les serveurs de service correspondants par l'intermédiaire du serveur à communication bidirectionnelle.

6. Système selon la revendication 1, dans lequel les passerelles (23) se connectent chacune à une pluralité de dispositifs d'objets pour donner lieu à l'Internet des objets, IDO.

7. Procédé automatisé de répartition de serveur (300), comprenant :
une passerelle (23) pas encore répartie et communicant avec un serveur de répartition (20) par l'intermédiaire d'un protocole de communication bidirectionnelle afin de répartir la passerelle à l'un parmi une pluralité de serveurs de service (24) au moyen du serveur de répartition (31 et 32) ;
le serveur de répartition répartie dans la passerelle à l'un parmi les serveurs de service conformément à un état de répartition des serveurs de service et conformément à des limites de service supérieures reflétant les plus grands nombres de passerelles pouvant être desservies par les serveurs de service (33) respectivement ;
le serveur de répartition mettant à jour l'état de répartition des serveurs de service (34) ;
le serveur de répartition notifiant la passerelle d'un serveur de services correspondants par l'intermédiaire du protocole de communication bidirectionnelle (35) ; et
un utilisateur obtenant les informations concernant l'état de répartition par l'intermédiaire d'une interface utilisateur devant être informée de l'un desdits serveurs de service qui correspond à ladite passerelle associée à un réseau intelligent domestique devant être commandé.

8. Procédé selon la revendication 7, dans lequel le protocole de communication bidirectionnelle applique un protocole de communication à message orienté.

9. Procédé selon la revendication 8, dans lequel le protocole de communication à message orienté comprend un protocole de messagerie et de présence extensible, XMPP, ou un protocole de transport de télémétrie d'attente de message, MQTT.

10. Procédé selon la revendication 7, dans lequel les informations concernant l'état de répartition sont mises à jour dans une base de données (22).

11. Procédé selon la revendication 7, comprenant en outre : le serveur de répartition (20) notifiant le serveur de service correspondant (24) de la passerelle (23) devant être réparti.

12. Procédé selon la revendication 7, comprenant en outre : la passerelle (23) enregistrant au niveau du serveur de service correspondant (24) par l'intermédiaire du protocole de communication bidirectionnelle (37) ; et après l'enregistrement, la passerelle communique avec le serveur de service correspondant par l'intermédiaire du serveur de communication bidirectionnelle (38).

13. Procédé selon la revendication 7, dans lequel la passerelle (23) se connecte à une pluralité de dispositifs d'objets pour donner lieu à l'Internet des objets, IDO.
